# EUROPEAN PATENT APPLICATION

(11) **EP 1 905 504 A1**
(43) Date of publication of application: **02.04.2008**
(21) Application number: 06020153.0
(22) Date of filing: 26.09.2006
(51) Int. Cl.: B01F 3/04, B01F 15/02, B67D 1/04, B67D 1/00, B67D 1/12, A23L 2/54

(54) **Gas feeding device for soda machine**

(71) Applicant: Chang, Kuei-Tang, Banchiau City Tai pei 220 (TW)
(72) Inventor: Chang, Kuei-Tang, Banchiau City Tai pei 220 (TW)
(74) Representative: Wagner, Bernhard Peter

(57) **Abstract**

A gas pumping apparatus for soda machine pumps gas into a liquid container (6) and includes a gas supplying unit (10), a gas pumping stage (20) and a rotational unit (30). The gas supplying unit includes a gas tube (14) and a handgrip (15) with a block extended on one side of the handgrip. The gas pumping stage includes a gas inlet connector (22) communicated with the gas tube and fixing ring (25) communicated with the gas inlet connector. The fixing ring includes through groove (251) and guiding groove (252) communicated with the through groove. The liquid container includes a locking block embedded into the guiding groove and fixed in the through groove. The rotational unit includes a rotational piece (31) with a first extension arm (312) and a second extension arm (313). The first extension arm is corresponding to the block of the handgrip and the second extension arm is arranged in the through groove for the operation of the locking block.

## Description

### BACKGROUND OF THE INVENTION

### Field of the Invention

The present invention relates to a gas pumping apparatus for a soda machine, especially to a gas pumping apparatus for a household soda machine.

### Description of Prior Art

The conventional liquid container for containing soda is generally made of material with high strength such as metal, thick glass or high-strength plastic. The cost of the container is generally higher than that of the internal liquid. The disposal of those liquid containers is uneconomic and will cause environment contamination. The most popular sodas generally belong to specific flavors. Therefore, it is more economic to store carbon dioxide of the soda in a pressured container, which is separated from liquid container. The carbon dioxide is added into liquid when user wants to drink soda.

The conventional soda machine generally comprises a gas supplying unit, an air pumping stage and a rotational unit. The air supplying unit comprises a gas container and a fixing stage enclosed with the gas container. A valve is arranged on the fixing stage, a gas tube is communicated with the valve and a handgrip is to control open/close of the gas container. The air pumping stage comprises a panel and a gas inlet connector communicated with the gas tube. A fixing ring is connected below the gas inlet connector and a plurality of through grooves are defined below the fixing ring. The rotational unit is provided below the fixing ring to fix the liquid container and is locked with the fixing ring. The rotational unit comprises bump and locking grooves to engage with the fixing ring and the liquid container, respectively.

However, in the gas pumping structure for conventional soda machine, the rotational unit and the gas pumping stage are necessary and are arranged separately. User might have difficulty to find the rotational unit. The operability of the conventional soda machine is poor because the components thereof are complicated.

### SUMMARY OF THE INVENTION

The present invention to provide a gas pumping apparatus for soda machine, which has safety mechanism for gas button.

Accordingly, the present invention provides a gas pumping apparatus for soda machine, which pumps gas into a liquid container and comprises:
a gas supplying unit comprising a gas container and a fixing stage sealed to the gas container, a valve being arranged on the fixing stage, a gas being tube communicated with the valve and a handgrip being used for controlling open and close of the valve, and a block being extended from one side of the handgrip;
a gas pumping stage comprising a panel, a gas inlet connector communicated with the gas tube of the gas supplying unit, a fixing ring arranged below the gas inlet connector and connected to the panel and communicated with the gas inlet connector, a plurality of through grooves below the fixing ring and a guiding groove communicated with the through grooves, a plurality of locking blocks arranged on an opening of the liquid container and embedded into the through grooves, and a projective shaft arranged on one side of the fixing ring; and
a rotational unit comprising a rotational piece with an axial cover capping the projective shaft of the gas pumping stage, a first extension arm extended from the axial cover and a second extension arm separated with the first extension arm, the first extension arm corresponding to the block and the second extension arm being arranged in the through groove for operation by the locking block.

### BRIEF DESCRIPTION OF DRAWING:

The features of the invention believed to be novel are set forth with particularity in the appended claims. The invention itself however may be best understood by reference to the following detailed description of the invention, which describes certain exemplary embodiments of the invention, taken in conjunction with the accompanying drawings in which:
Fig. 1 shows the perspective view of the gas supplying unit according to the present invention.
Fig. 2 shows the exploded view of the gas pumping stage and the rotational unit according to the present invention.
Fig. 3 shows the perspective view of the pressure leaking device according to the present invention.
Fig. 4 shows the perspective view of the gas pumping apparatus according to the present invention.
Fig. 5 shows the perspective view of the gas pumping apparatus assembled with a soda machine according to the present invention.
Fig. 6 shows the front view of the gas pumping apparatus of the present invention assembled with a liquid container.
Fig. 7 shows a top view of the gas pumping apparatus of the present invention assembled with a liquid container.
Fig. 8 shows another top view of the gas pumping apparatus of the present invention assembled with a liquid container.
Fig. 9 shows the perspective view of the gas pumping apparatus of the present invention assembled with a liquid container.

### DETAILED DESCRIPTION OF THE INVENTION

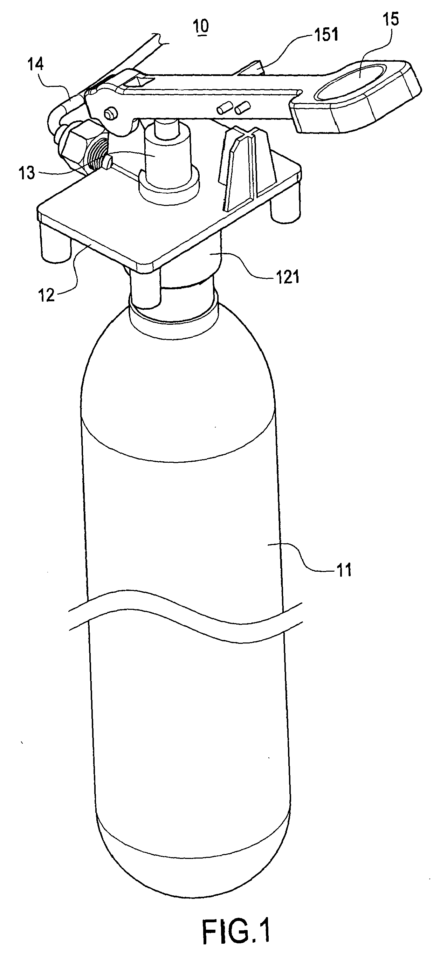

With reference to Figs. 1 to 4, the present invention provides a gas pumping apparatus for soda machine, which pumps gas into a liquid container 6. The gas pumping apparatus of the present invention comprises a gas supplying unit 10, a gas pumping stage 20 and a rotational unit 30.

The gas supplying unit 10 comprises a gas container 11 and a fixing stage 12 sealed to the opening of the gas container 11. The gas container 11 contains carbon dioxide (CO2) therein. The fixing stage 12 has a cap 121 projecting from bottom thereof and screwed with the opening of the gas container. A valve 13 is provided atop the cap 121 and communicated with the cap 121. A gas tube 14 and a handgrip 15 controlling open/close of the valve are provided to the valve 13. A block 151 is provided on inner side of the handgrip 15.

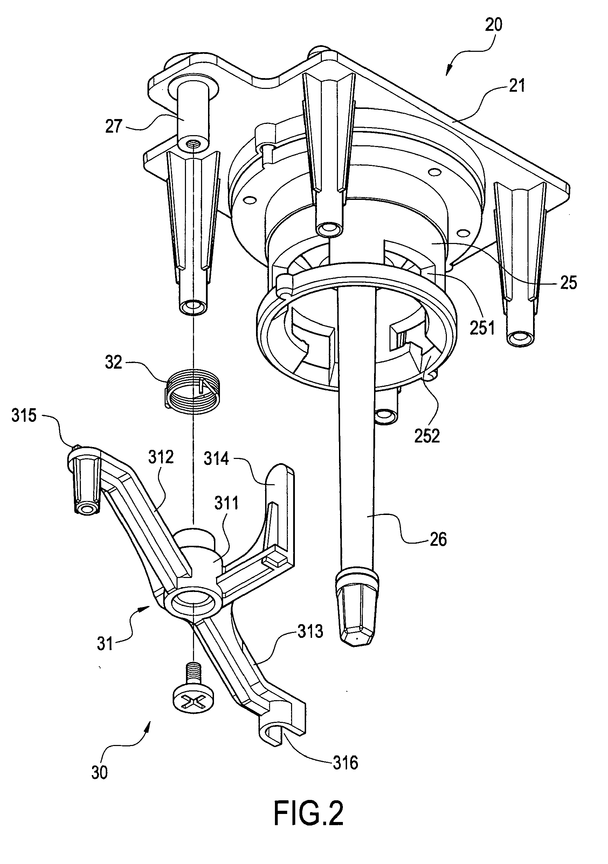

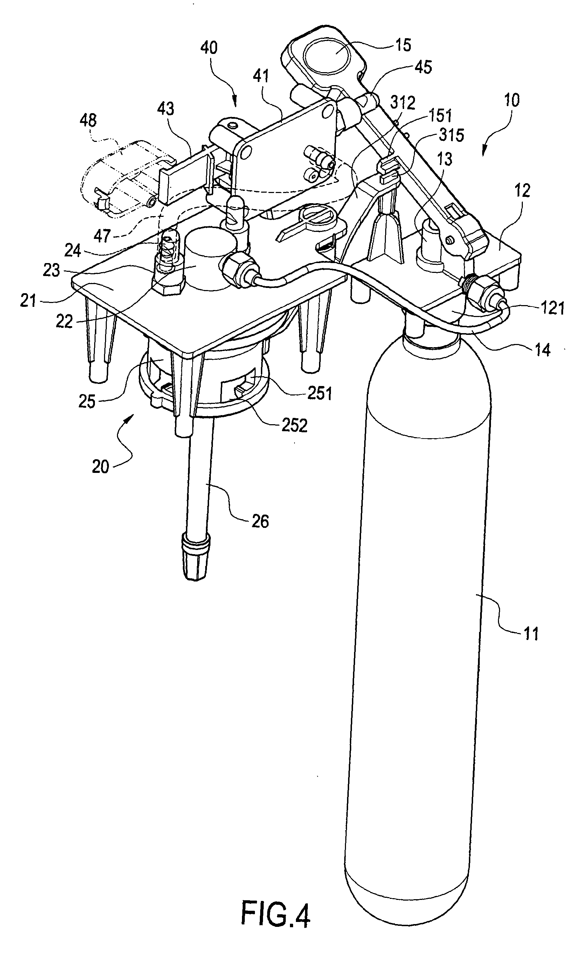

The gas pumping stage 20 comprises a panel 21, a gas inlet connector 22 atop the panel and communicated with the gas tube 14 (as shown in Fig. 4), two degas valves 23 in front of and behind the gas inlet connector 22, and a gas outlet connector 24 on left side of the gas inlet connector 22. A fixing ring 25 is provided on the bottom side of the panel 21 with respect to the gas inlet connector 22 and the gas outlet connector 24. The fixing ring 25 is communicated with the gas inlet connector 22 and the gas outlet connector 24. A plurality of through grooves 251 is defined below the fixing ring 25 and guiding grooves 252 are arranged on inner wall of the fixing ring 25 and communicated with the through grooves 251. A gas pumping shaft 26 is extended downward from center of the fixing ring 25 and is communicated wit the gas inlet connector 22. A projective shaft 27 is extended downward from one side of the fixing ring 25 as shown in Fig. 2.

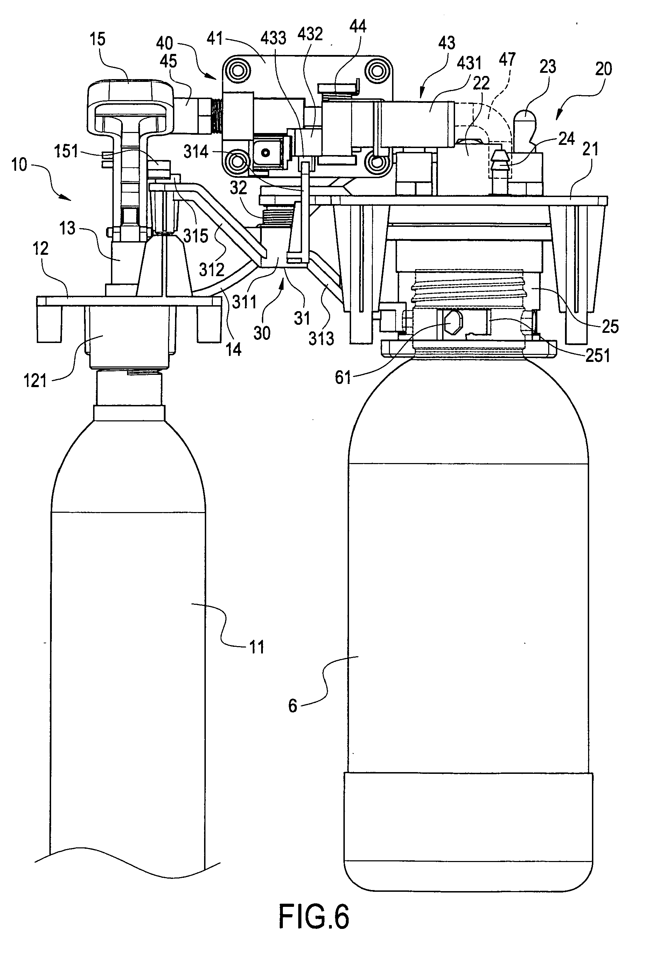

The rotational unit 30 comprises a rotational piece 31 capped on the projective shaft 27 of the gas pumping stage 20 and a torque spring 32 clamped between the rotational piece 31 and the panel 21 of the gas pumping stage 20. The rotational piece 31 comprises an axial cover 311 capping the projective shaft 27, a first extension arm 312 extended upward from the axial cover 311, a second extension arm 313 extended downward from the axial cover 311 and having 180 degree with respect to the first extension arm 312, and a third extension arm 314 extended upward from the axial cover 311 and vertical to the first extension arm 312. The rotational piece 31 can be fixed to the projective shaft 27 by screw. The first extension arm 312 is provided with respect to the handgrip 15 of the gas supplying unit 10 and comprises bump 315 clamped with the block 151 of the handgrip 15. The second extension arm 313 is provided with respect to the fixing ring 25 and comprises a U-shaped locking groove 316 at distal end thereof. The U-shaped locking groove 316 can be arranged in the through groove 251 of the fixing ring 25 for the operation of a locking block 61 of the liquid container 6. The upper end and lower end of the torque spring 32 are locked to lateral faces of the panel 21 and the first extension arm 312, as shown in Fig. 6. Therefore, the rotational piece 31 can restore to original position by the elastic force of the torque spring 32.

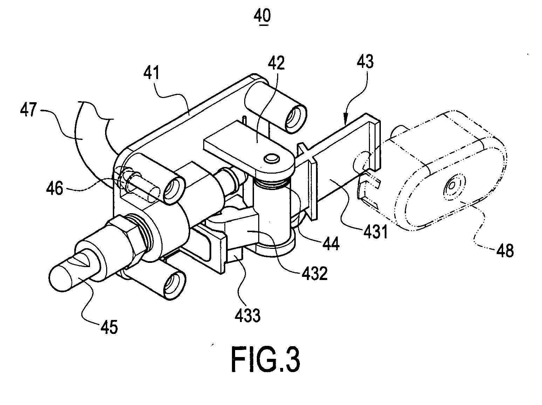

The gas pumping apparatus for soda machine of the present invention further comprises a pressure leaking device 40 as shown in Fig. 3. The pressure leaking device 40 comprises a fixing plate 41, two side arms 42 extended upward from top face of the fixing plate 41, a swing piece 43 pivotally arranged between the side arms 42, a spring 44 clamped between the side arms 42 and the swing piece 43, a degas valve 45 horizontally connected to the fixing plate 41, a degas connector 46 communicated with the degas valve 45 and arranged on back side of the fixing plate 41, and a degas tube 47 communicated with the degas connector 46 and the degas connector 24 of the gas pumping stage 20. A long arm 431 and a short arm 432 are extended from both sides of the swing piece 43, where a button 48 is arranged in front of the long arm 432 to push the swing piece 43, and a stopping wedge 433 is formed on bottom of the short arm 432 and corresponding to the third extension arm 314 to control open/close of the degas valve 45.

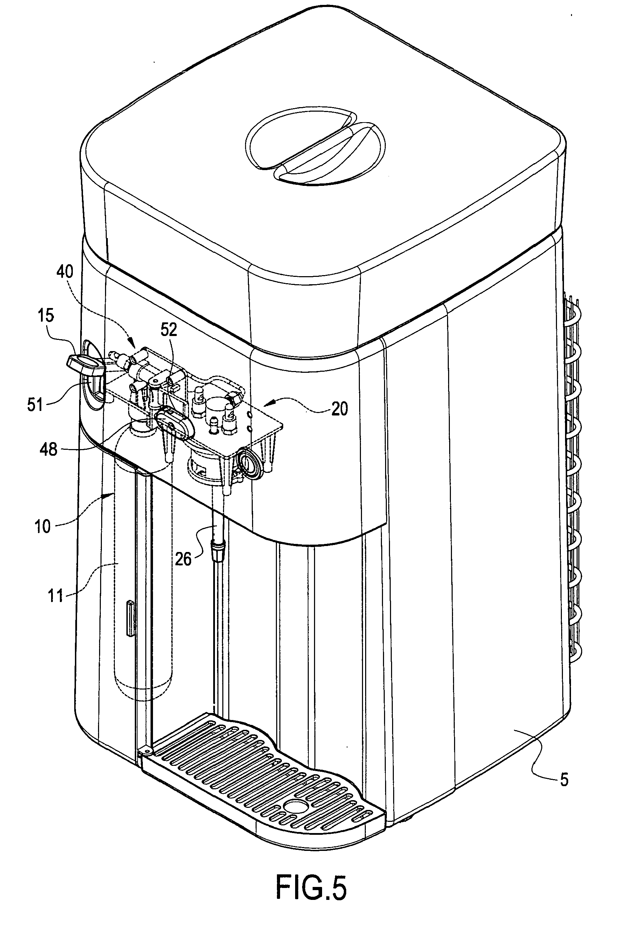

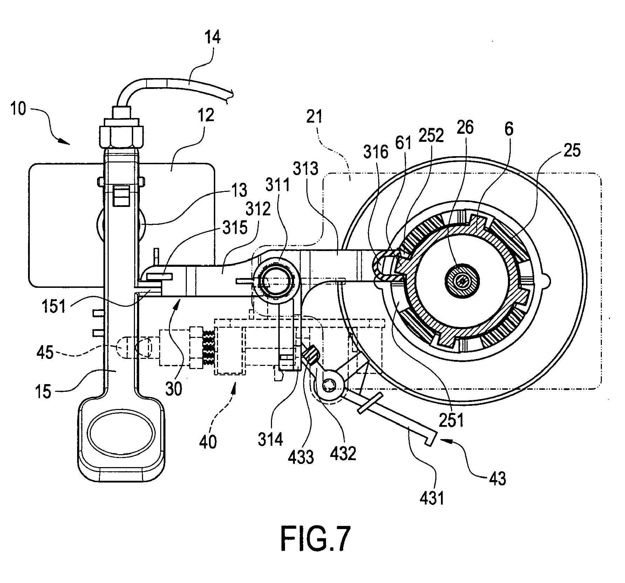

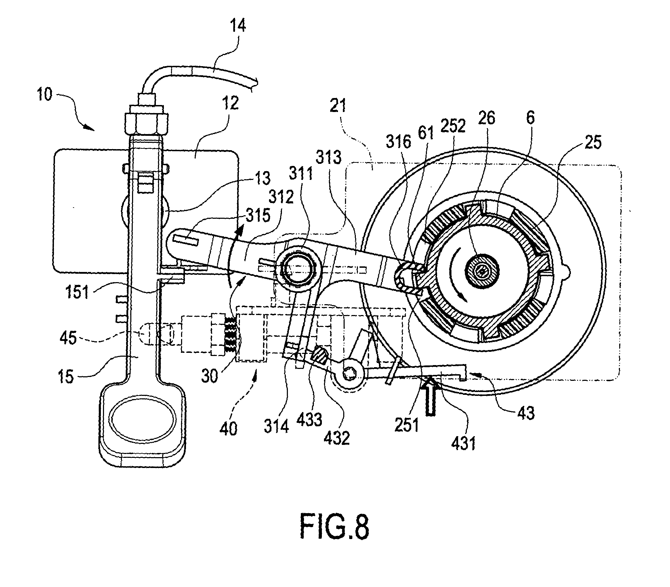

With reference to Figs. 5 to 8, the gas pumping apparatus of the present invention can be arranged on a front inner position of a soda machine 5. Two holes 51 and 52 are defined on front face of the soda machine 5 to expose one end of the handgrip 15 and the button 48 for user operation. The opening of the liquid container 6, which has a plurality of locking blocks 61, is aligned with and placed into the fixing ring 25 of the gas pumping stage 20. The locking blocks 61 enter the guiding groove 252 of the fixing ring 25 as shown in Fig. 2, where one of the locking blocks 61 is embedded into the locking groove 316 of the second extension arm 313. Before the liquid container 6 is rotated, the first extension arm 312 is below the block 151 and the bump 315 and the bump 315 of the first extension arm 312 is engaged with the block 151, whereby the handgrip 15 cannot be moved downward. The top end of the third extension arm 314 is engaged with the stopping wedge 433 of the swing piece 43 to prevent downward movement of the button 48 and to provide a safety mechanism for the gas pumping apparatus of the present invention.

When the liquid container 6 is rotated in counter clockwise direction, the first extension arm 312 and the third extension arm 314 will not be confined by the handgrip 15 and the stopping wedge 433 of the swing piece 43, where the projective shaft 27 is the rotational center of the rotational piece 31. Moreover, the locking block 61 of the liquid container 6 is locked to the through groove 251 of the fixing ring 25.

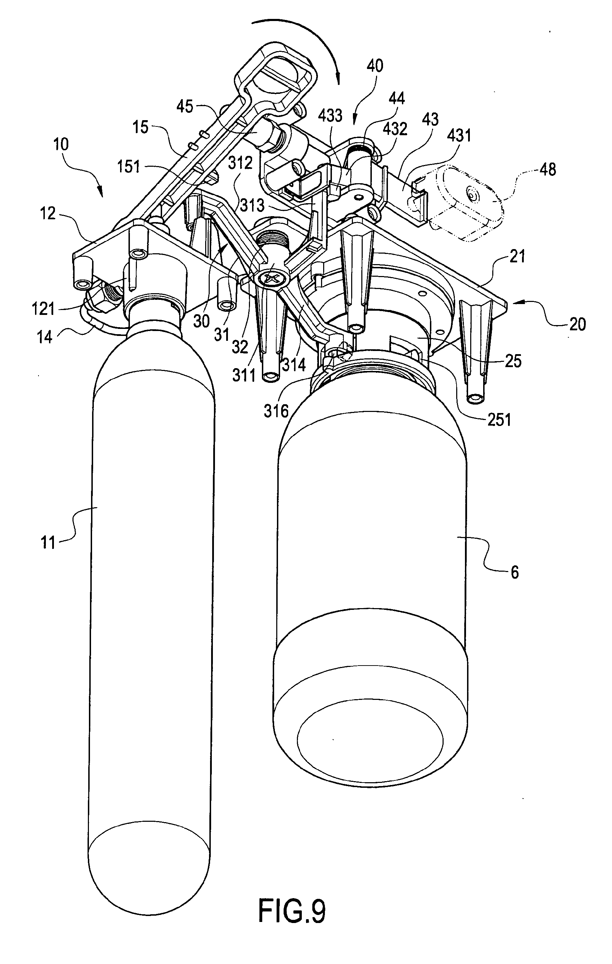

With reference to Fig. 9, when the handgrip 15 is swung downward and abutted against the valve 13, carbon dioxide gas flows to the gas inlet connector 22 through the gas tube 14, and then flows into the liquid container 6 through the gas pumping shaft 26 for mixing with liquid therein. After gas is injected into the liquid container 6, considerable pressure is present between the liquid container 6 and the gas pumping stage 20. The button 48 is operated to release pressure from the degas valve 45 of the pressure leaking device 40. Afterward, the liquid container 6 is rotated in clockwise direction and the liquid container 6 can be easily removed.

## Claims

1. A gas pumping apparatus for a soda machine, which pumps gas into a liquid container (6) and comprising a locking bloc on opening thereof, the gas pumping apparatus comprising:
a gas supplying unit (10) comprising a gas container (11) and a fixing stage (12) sealed to the gas container (11), a valve (13) being arranged on the fixing stage (12), a gas tube (14) being communicated with the valve (13) and a handgrip (15) being used for controlling open and close of the valve (13);
a gas pumping stage (20) comprising a panel (21), a gas inlet connector (22) communicated with the gas tube (14) of the gas supplying unit (20), a fixing ring (25) arranged below the gas inlet connector (22) and connected to the panel(21) and communicated with the gas inlet connector (22); the gas pumping apparatus being
**characterized in that**:
the handgrip (15) comprises a block (151) on one side thereof, the e fixing ring (25) of the gas pumping stage (20) comprises a plurality of through grooves (251) below the fixing ring (25) and guiding groove (252) communicated with the through grooves (251), a projective shaft (27) arranged on one side of the fixing ring (25) and connected to a rotational piece (31) of a rotational unit (30), the rotational piece (31) comprising an axial cover (311) capping the projective shaft (27) of the gas pumping stage (20), a first extension arm (312) extended from the axial cover (311) and a second extension arm (313) separated with the first extension arm (312), the first extension arm (312) corresponding to the block (151) and the second extension arm (313) being arranged in the through groove (251) for operation by the locking block (61), the first extension arm (312) being staggered with the block (151), whereby the handgrip (15) is operated to inject the air in the gas container (11) into the liquid container (6).

2. The gas pumping apparatus for soda machine as in claim 1, further comprising a gas pumping shaft (26) communicated with the gas inlet connector (22) and downward extended from center of the fixing ring (25).

3. The gas pumping apparatus for soda machine as in claim 1, wherein the first extension arm (312) is extended upward from the axial cover (311), and the second extension arm (313) is extended downward from the axial cover (311) and has 180 degree with the first extension arm (312).

4. The gas pumping apparatus for soda machine as in claim 3, wherein the first extension arm (312) comprises a bump (315) engaged with the block (151) of the handgrip (15).

5. The gas pumping apparatus for soda machine as in claim 1, wherein the second extension arm (313) comprises a locking groove (316) at a distal end thereof and arranged in one through groove (251).

6. The gas pumping apparatus for soda machine as in claim 5, wherein the locking groove (316) is ofU shape.

7. The gas pumping apparatus for soda machine as in claim 3, wherein the rotational piece (31) comprises a third extension arm (314) extended upward from the axial cover (311) and vertical to the first extension arm (312).

8. The gas pumping apparatus for soda machine as in claim 1, wherein the rotational unit (31) further comprises a torque spring (32) clamped between the rotational piece (31) and the panel (21), and upper and lower ends of the torque spring (32) are clamped to the panel (21) and the first extension arm (312), respectively.

9. The gas pumping apparatus for soda machine as in claim 1, further comprising a pressure leaking device (40), the pressure leaking device (40) comprising a degas tube (47), the panel (21) being provided with a gas outlet connector (24) communicated with the fixing ring (25), and the degas tube (47) being communicated with the gas outlet connector (24) to expel excessive gas in the liquid container (6).
